(19) Europäisches Patentamt
European Patent Office
Office européen des brevets

(11) **EP 2 809 078 A1**

(12) **EUROPEAN PATENT APPLICATION**

(43) Date of publication:
**03.12.2014 Bulletin 2014/49**

(51) Int Cl.:
*H04N 21/84* (2011.01)          *G11B 27/19* (2006.01)
*G06F 17/30* (2006.01)

(21) Application number: **13305691.1**

(22) Date of filing: **27.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Kamphenkel, Oliver**
  **31275 Lehrte (DE)**
• **Brune, Thomas**
  **30449 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for managing metadata files**

(57)      A method for metadata files (1) and an apparatus (2) configured to perform managing of metadata files (1) are described. A metadata file (1) is retrieved (10) via an input (20). A metadata analyzer (21) then determines (11) information within the metadata file (1) related to at least a first domain (3) and a second domain (4, 5). Based on the determined information within the metadata file (1), a data management unit (22) creates (12) entries (31-35, 41, 42, 51, 52) in the first domain (3) and/or in the second domain (4, 5) and further creates (13) references (7) between the entries (31-35, 41, 42, 51, 52) and the metadata file (1). The entries (31-35, 41, 42, 51, 52) and references (7) created (12, 13) by the data management unit (22) are then stored (14) in a storage unit (23).

Fig. 5

**Description**

**FIELD OF THE INVENTION**

The invention relates to a method and to an apparatus for managing metadata files. More specifically, a method and an apparatus are described, which allow managing of information contained in metadata files over multiple domains.

**BACKGROUND OF THE INVENTION**

When metadata of a content production process is collected and managed, there are usually different files from very different sources. For example, during a movie production process metadata are gathered from camera devices, motion trackers, microphones, etc. These files contain information of different aspects of the production. For example, the production script contains information about a movie plot, characters, etc. of scenes of a film. The camera metadata file contains technical recording data, such as lens settings or camera type. This information is isolated in separate files and in different portions with different interrelations. Usual repositories can incorporate and manage those files and display their content. However, such repositories are not able to answer requests to obtain all metadata of a scene, a shot, or a take, to obtain all metadata of a certain time, to check whether all available metadata of a scene, a shot, or a take have been added to the repository, or to check if the metadata information is consistent. One solution to this problem would be to ensure that different sources coordinate the generation of metadata, e.g. that the different sources generate metadata that contain synchronized unique identifiers. However, this is not the case today and is very difficult to implement in view of the huge number of available sources.

**SUMMARY OF THE INVENTION**

It is an object of the invention to provide a more versatile solution for managing metadata files, which is capable of handling complex requests.
According to one aspect of the invention, a method for managing metadata files comprises the steps of:

- retrieving a metadata file;
- determining information within the metadata file related to at least a first domain or a second domain;
- creating entries in the first domain and/or in the second domain based on the determined information within the metadata file;
- creating references between the entries and the metadata file; and
- storing the created entries and references.

Accordingly, an apparatus configured to manage metadata files comprises:

- an input configured to retrieve a metadata file;
- a metadata analyzer configured to determine information within the metadata file related to at least a first domain or a second domain;
- a data management unit configured to create entries in the first domain and/or in the second domain based on the determined information within the metadata file and to create references between the entries and the metadata file; and
- a storage unit configured to store the entries and references created by the data management unit.

Similarly, a computer readable storage medium has stored therein instructions enabling managing of metadata files, which when executed by a computer, cause the computer to:

- retrieve a metadata file;
- determine information within the metadata file related to at least a first domain or a second domain;
- create entries in the first domain and/or in the second domain based on the determined information within the metadata file;
- create references between the entries and the metadata file; and
- store the created entries and references.

An apparatus according to the invention, i.e. a metadata repository, manages the metadata files, respectively the information parts of the files, in those domains it has references to. These domains are on the one hand a hierarchy domain and on the other hand one or more temporal domains. For example, a production script of a movie contains information about the shots of a scene. In that case a certain shot or scene constitutes a hierarchical entity, i.e. an entry in the hierarchy domain. In contrast, a recording report contains temporal marks of captured camera clips, preferably in the formats of SMPTE timecodes or time of day indications. Those temporal marks are represented in the management structure as time entries in temporal domains. The management structure of the repository is able to maintain multiple references from a file, respectively its information parts, to entities in a hierarchical structure, i.e. entries in the hierarchy domain, and/or to entries in time structures. The metadata information is inherited in the hierarchy domain, e.g. from a scene to its shots, and also in the temporal domains. Information from multiple sources with a reference to the same SMPTE timecode or time of day indication is connected. Beyond that the repository has a cross domain inheritance. When a hierarchy entity has a reference to a file which in turn has a reference to entries in the time domains, the hierarchy entity inherits the metadata information from corresponding time entries. And vice versa, metadata is inherited from hierarchy entities to time entries.

Using the gathered information the repository is able to detect and build connections and interrelations between metadata information, i.e. to compose a set of all metadata of a certain time entry or a certain hierarchy entity. Beyond that it is able to check if the metadata is consistent on different levels and domains, e.g. if the mapping between time of day and SMPTE timecode is always synchronized. The repository can also check for completeness or progress, i.e. it can check for a certain metadata in the hierarchy domain or in temporal domain. For example, the repository is able to determine if there is a recording report for all time entries or all hierarchy entities available.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

## BRIEF DESCRIPTION OF THE DRAWINGS

Fig. 1     depicts a repository structure of a production script;

Fig. 2     illustrates a repository structure of camera metadata;

Fig. 3     depicts a repository structure with recording report;

Fig. 4     shows an information repository with multiple files;

Fig. 5     schematically illustrates a method according to the invention for managing metadata files; and

Fig. 6     depicts an apparatus configured to implement the method of Fig. 5.

## DETAILED DESCRIPTION OF A PREFERRED EMBODIMENT

In the following the invention shall be explained with reference to metadata files generated during a movie production process. Of course, the invention is not limited to this kind of metadata. It is likewise applicable to metadata arising from other type of production processes, e.g. production of an album with musical compositions, production of a TV show or a commercial, or even production of a newspaper or a magazine, where texts and images from different sources as well as layout information need to be handled.

All different metadata files 1 arising during production are added to an apparatus 2 configured to manage metadata, i.e.to a repository. When a metadata file 1 is added to the repository 2, the file is split into information parts that have a reference to a hierarchical entity, i.e. an entry in the hierarchy domain, and/or to a time entry. Those entries are generated in the repository management structure and references 7 to the metadata file 1 are created. In the figures, the references 7 are indicated by the solid arrows. The references 7 are preferably managed in one or more tables of references.

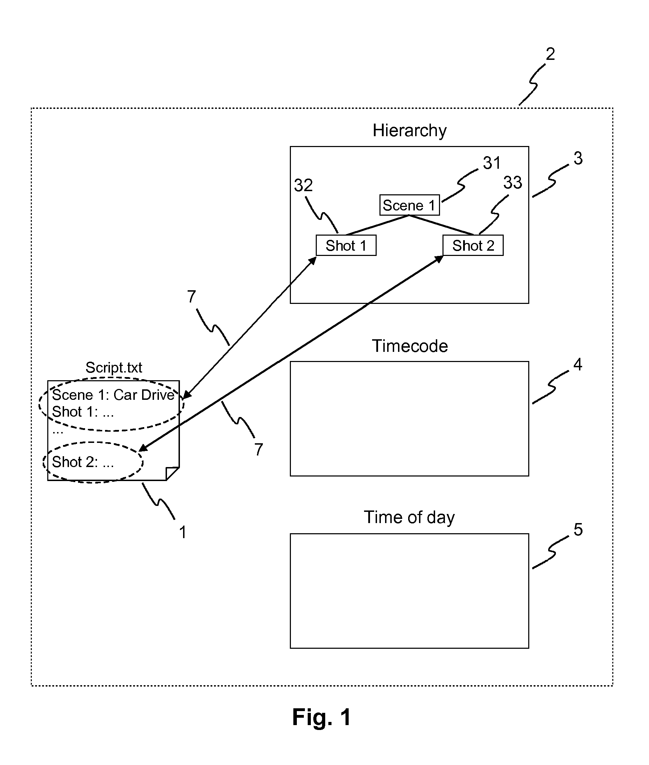

For example, the production script contains information about the plot and characters of the shots of a scene. Fig. 1 depicts the entries that are created in the hierarchy domain 3 and the corresponding references 7 when such a file 1 is added to the repository 2. In particular, references to an entry 'Scene 1' 31 comprising a 'Shot 1' 32 and a 'Shot 2' 33 are created in the repository 2. More generally speaking, the repository 2 contains information about which metadata the production script contains of a certain hierarchical entity.

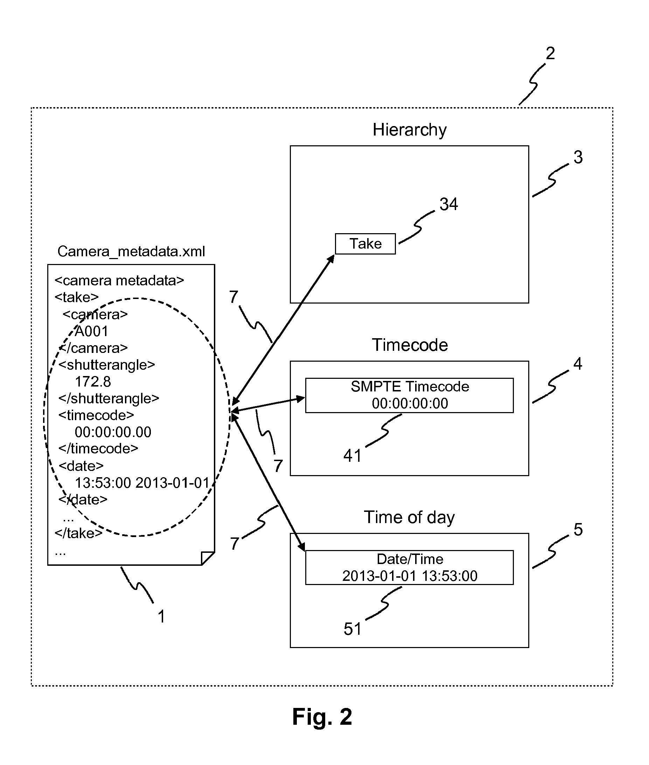

If the information parts of a file 1 also contain data about time relations, references 7 to the temporal structures are also created. Example of such temporal structures are SMPTE timecodes (SMPTE: Society of Motion Picture and Television Engineers) and time of day. Fig. 2 depicts the entries 41, 51 that are created in temporal domains 4, 5 and the corresponding references 7 when a metadata file 1 with camera metadata is added to the repository 2. Camera metadata usually contains time information, i.e. an indication about when a take has been shot, as well as the settings of a camera, e.g. technical settings. Using this information, references 7 to the time entries and to a hierarchy level, here the level of a 'Take', can be created in the repository 2, but not to a specific hierarchical entity. In other words, the repository 2 contains the metadata information of a camera for a given time entry 41, 51 and located on a given hierarchy level, i.e. 'Take'. It is, however, not known which take it is, i.e. to which shot of which scene the take belongs.

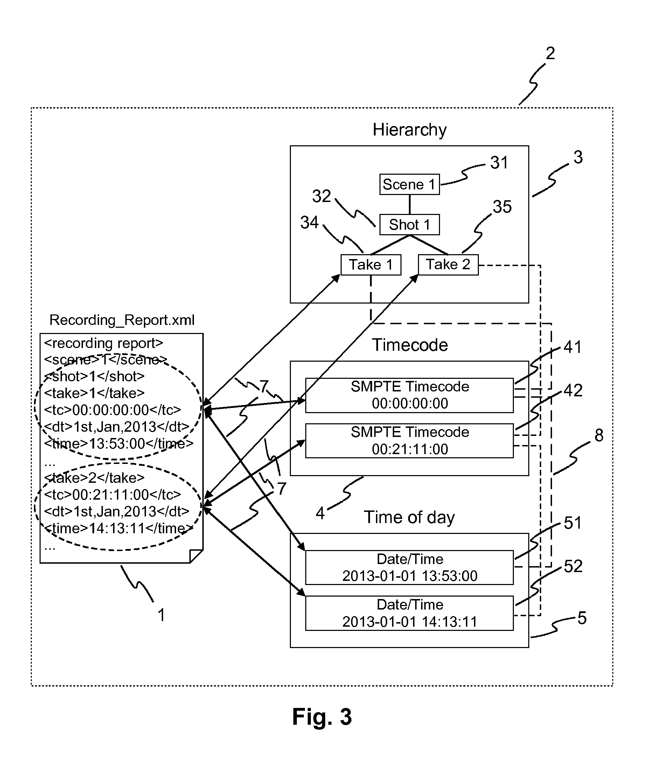

There are also metadata files 1 that contain information in the temporal domains as well as in the hierarchy domain, e.g. a recording report. As depicted in Fig. 3, a metadata file 1 with a recording report contains information about when a certain take has been shot. Information in the temporal domains 4, 5 are thus SMPTE timecodes and the time of day, whereas information in the hierarchy domain 3 are scene, shot, and take entities. This information is incorporated in the repository 2 using entries 31, 32, 34, 35, 41, 42, 51, 52 and references 7 to the temporal and hierarchical management structures. By means of the references 7 from the file 1 or information parts of the file 1 to the different domains 3, 4, 5, cross domain relations are preferably established. In Fig. 3 these cross domain relations are indicated by dashed lines 8.

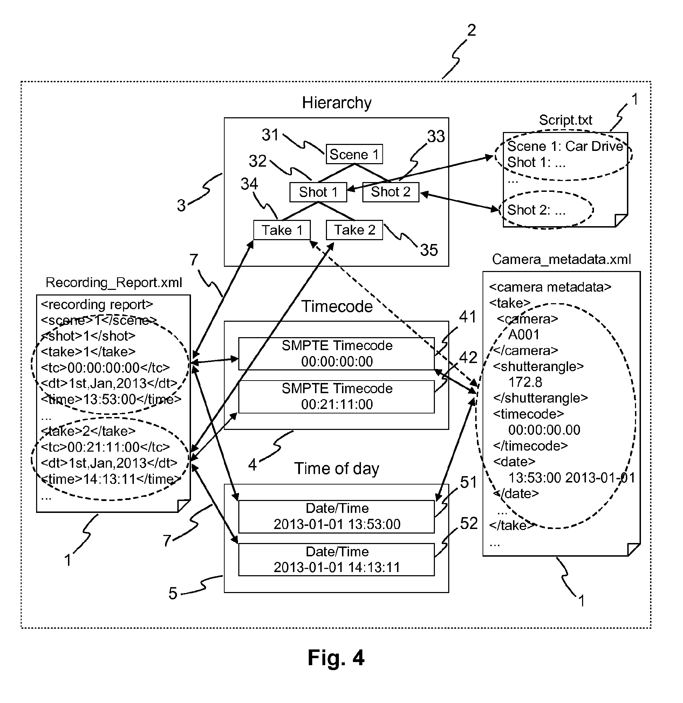

Adding different metadata files 1 to the repository 2 and connecting the information across the domains 3, 4, 5 results in a repository management structure as depicted in Fig. 4. In the figure not all references 7 are provided with reference numerals for simplicity. The metadata repository 2 has information about the added metadata of certain time entries 41, 42, 51, 52 and of certain entries in the hierarchy domain 3. Based on this data, metadata sets are composed with cross domain inheritance:

$$
\begin{aligned}
metadata(hierarchyEntity) &= metadata(hierarchyEntity \quad (1) \\
&\quad ->referencedFileUnits) \\
&\cup \\
&\quad metadata(hierarchyEntity \quad (2) \\
&\quad ->parent) \\
&\cup \\
&\quad metadata(hierarchyEntity \quad (3) \\
&\quad ->allChildren) \\
&\cup \\
&\quad metadata((hierarchyEntity \quad (4) \\
&\quad ->referencedFileUnits) \\
&\quad ->allTimeReferences)
\end{aligned}
$$

A hierarchical entity thus gets metadata information from the files it has references to ((1), 'referencedFileUnits') and also inherits the metadata from its hierarchical tree ((2), 'parent'; (3), allChildren). Beyond that a hierarchical entity inherits the metadata information from all the time relations of its referenced files ((4), 'referencedFileUnits', 'allTimeReferences').

The metadata sets of the time entries are composed accordingly:

$$metadata(timeEntry) = metadata(timeEntry \quad (1)$$
$$->referencedFileUnits)$$
$$\cup$$
$$metadata((timeEntry \quad (2)$$
$$->referencedFileUnits)$$
$$->allTimeRelations)$$
$$\cup$$
$$metadata((timeEntry \quad (3)$$
$$->referencedFileUnits)$$
$$->allHierarchyReferences)$$

The metadata set of a time entry is composed of the metadata information of its referenced files ((1), 'referencedFileUnits') and the metadata of the time entries the referenced files have references to ((2), 'referencedFileUnits', 'allTimeRelations'). But the metadata set of a time entry also inherits the information from the hierarchy references of the referenced file units ((3), 'referencedFileUnits', 'allHierarchyReferences'.

Based on the gathered relations the information repository 2 is able to compose a set of all metadata of a certain time entry or a certain hierarchy entity. Beyond that it is able to check if the metadata is consistent, e.g. if the mapping between time of day and SMPTE timecode is always synchronized. The repository 2 can also check for completeness or progress. For example, the repository is able to determine if there is a recording report for all time entries or all hierarchy entities available.

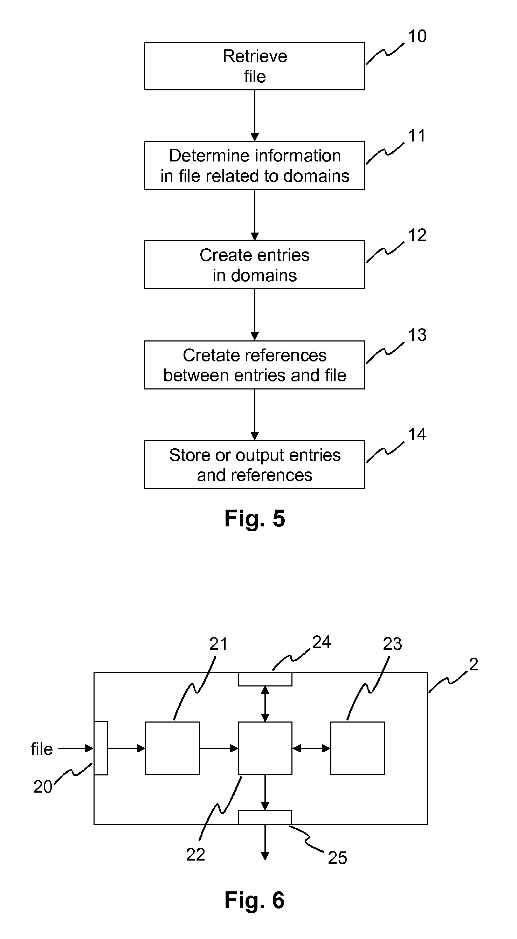

A method according to the invention for managing metadata files 1 is schematically illustrated in Fig. 5. After retrieving 10 a metadata file 1, e.g. from a network or from a local storage, information within the metadata file 1 related to at least a first domain 3 or a second domain 4, 5 is determined 11. Based on the determined information within the metadata file 1 entries 31-35, 41, 42, 51, 52 in the first domain 3 and/or in the second domain 4, 5 are created 12. In addition, also references 7 between the entries 31-35, 41, 42, 51, 52 and the metadata file 1 are created 13. Finally, the created entries 31-35, 41, 42, 51, 52 and references 7 are stored 14 and/or provided to a network. If required, also the retrieved metadata file 1 is stored.

Fig. 6 depicts an apparatus 2 configured to implement the method of Fig. 5. The apparatus 2 has an input 20 for retrieving 10 a metadata file 1. A metadata analyzer 21 then determines 11 information within the metadata file 1 related to at least a first domain 3 or a second domain 4, 5. Based on the determined information within the metadata file 1 a data management unit 22 creates 12 entries 31-35, 41, 42, 51, 52 in the first domain 3 and/or in the second domain 4, 5 and further creates 13 references 7 between the entries 31-35, 41, 42, 51, 52 and the metadata file 1. The resulting entries 31-35, 41, 42, 51, 52 and references 7 are stored 14 in a storage unit 23 and/or provided to a network. Preferably the apparatus 2 further has a user interface 24 enabling a user to access and or manipulate the stored information and an output 25 for outputting information, e.g. results of queries created by the user. Of course, the input 20 may be combined with the output 25 into a bi-directional communication interface. Also, the various units of the apparatus 2 may likewise be combined or partially combined into a single unit or implemented as software running on a processor.

Although the invention has been described hereinabove with reference to a specific embodiment, it is not limited to this embodiment and no doubt further alternatives will occur to the skilled person that lie within the scope of the invention as claimed. For example, the invention is not only applicable to professional production processes. It may likewise be used for production processes performed by a consumer. Upon generation of a slide show a consumer may combine images and videos from potentially different sources with sound and text annotations. The temporal sequence of the slide show may be controlled by a control file, which is comparable to a script. A further consumer application is the management of audio files for background music during an event.

**Claims**

1.  A method for managing metadata files (1), the method comprising the steps of:

    - retrieving (10) a metadata file (1);
    - determining (11) information within the metadata file (1) related to at least a first domain (3) or a second domain (4, 5);
    - creating (12) entries (31-35, 41, 42, 51, 52) in the first domain (3) and/or in the second domain (4, 5) based on the determined information within the metadata file (1);
    - creating (13) references (7) between the entries (31-35, 41, 42, 51, 52) and the metadata file (1); and
    - storing (14) the created entries (31-35, 41, 42, 51, 52) and references (7).

2.  The method according to claim 1, **further** comprising the step of establishing cross domain relations (8) between the entries (31-35, 41, 42, 51, 52) in the first domain (3) and/or in the second domain (4, 5).

3.  The method according to claim 2, **further** comprising the step of generating sets of metadata for the entries (31-35, 41, 42, 51, 52) in the first domain (3) and/or in the second domain (4, 5) based on the references (7), the cross domain relations (8), and relations between entries of a domain (3, 4, 5).

4.  The method according to claim 3, **wherein** the relations between entries of a domain (3, 4, 5) are parent and/or child relations.

5.  The method according to one of the preceding claims, **wherein** the first domain (3) is a hierarchy domain and the second domain (4, 5) is a temporal domain.

6.  The method according to claim 5, **wherein** entries (31-35) in the first domain (3) are hierarchical entities and entries (41, 42, 51, 52) in the second domain (4, 5) are time entries.

7.  The method according to claim 6, **wherein** the hierarchical entities comprise scenes, shots, or takes, and the time entries (41, 42, 51, 52) comprise timecodes or time of day indications.

8.  The method according to one of the preceding claims, **wherein** the metadata files (1) comprise scripts, recording reports, or camera metadata.

9.  An apparatus (2) configured to manage metadata files (1), **characterized in that** the apparatus (2) is configured to perform a method according to claim 1 for managing metadata files (1).

10. An apparatus (2) configured to manage metadata files (1), the apparatus (2) **comprising:**

    - an input (20) configured to retrieve (10) a metadata file (1);
    - a metadata analyzer (21) configured to determine (11) information within the metadata file (1) related to at least a first domain (3) or a second domain (4, 5);
    - a data management unit (22) configured to create (12) entries (31-35, 41, 42, 51, 52) in the first domain (3) and/or in the second domain (4, 5) based on the determined information within the metadata file (1) and to create (13) references (7) between the entries (31-35, 41, 42, 51, 52) and the metadata file (1); and
    - a storage unit (23) configured to store (14) the entries (31-35, 41, 42, 51, 52) and references (7) created (12, 13) by the data management unit (22).

11. The apparatus (2) according to claim 10, **further** comprising a user interface (24) configured to enable a user to access and or manipulate the stored information and an output (25) configured to output information.

12. A computer readable storage medium having stored therein instructions enabling managing of metadata files (1), which when executed by a computer, cause the computer to:

    - retrieve (10) a metadata file (1);
    - determine (11) information within the metadata file (1) related to at least a first domain (3) or a second domain (4, 5);
    - create (12) entries (31-35, 41, 42, 51, 52) in the first domain (3) and/or in the second domain (4, 5) based on the determined information within the metadata file (1);
- create (13) references (7) between the entries and the metadata file (1); and
- store (14) the entries (31-35, 41, 42, 51, 52) and references (7) created (12, 13) by the data management unit (22).

**Fig. 1**

Fig. 2

**Fig. 3**

**Fig. 4**

```
┌─────────────────────┐
│     Retrieve        │      ╭─ 10
│       file          │
└─────────────────────┘
          │
          ▼
┌─────────────────────┐
│ Determine information│      ╭─ 11
│in file related to domains│
└─────────────────────┘
          │
          ▼
┌─────────────────────┐
│    Create entries    │      ╭─ 12
│     in domains       │
└─────────────────────┘
          │
          ▼
┌─────────────────────┐
│  Cretate references  │      ╭─ 13
│ between entries and file│
└─────────────────────┘
          │
          ▼
┌─────────────────────┐
│  Store or output entries│    ╭─ 14
│    and references    │
└─────────────────────┘
```

**Fig. 5**

**Fig. 6**

Europäisches
Patentamt

European
Patent Office

Office européen
des brevets

# EUROPEAN SEARCH REPORT

**Application Number**

EP 13 30 5691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/042650 A1 (ROENNING JEFF [US] ET AL) 18 February 2010 (2010-02-18) * paragraphs [0105], [0106], [0107], [0119], [0120], [0131], [0136]; figures 29,32,33,34 * | 1,2,5-12 | INV.<br>H04N21/84<br>G11B27/19<br>G06F17/30 |
| X | US 2002/199204 A1 (MORY BENOIT [FR] ET AL) 26 December 2002 (2002-12-26) * paragraphs [0026] - [0027], [0032], [0034], [0038], [0040] - [0041], [0045]; figures 3,4 * | 1,2,5-12 | |
| X | US 2010/005070 A1 (MORIYA YOSHIMI [JP] ET AL) 7 January 2010 (2010-01-07) * paragraphs [0088] - [0098]; figures 4,8 * | 1,5-12 | |
| A | US 2004/103233 A1 (SHINKAI MITSUTOSHI [JP] ET AL) 27 May 2004 (2004-05-27) * the whole document * | 1-12 | |

**TECHNICAL FIELDS SEARCHED (IPC)**

H04N
G11B
G06F

The present search report has been drawn up for all claims

| Place of search | Date of completion of the search | Examiner |
|---|---|---|
| Munich | 17 October 2013 | Seeger, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 5691

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2013

| Patent document cited in search report | | | Publication date | Patent family member(s) | | | Publication date |
|---|---|---|---|---|---|---|---|
| US 2010042650 | A1 | | 18-02-2010 | NONE | | | |
| US 2002199204 | A1 | | 26-12-2002 | CN | 1389788 | A | 08-01-2003 |
| | | | | EP | 1262884 | A1 | 04-12-2002 |
| | | | | FR | 2825556 | A1 | 06-12-2002 |
| | | | | JP | 2002373112 | A | 26-12-2002 |
| | | | | US | 2002199204 | A1 | 26-12-2002 |
| US 2010005070 | A1 | | 07-01-2010 | AU | 2003221185 | A1 | 27-10-2003 |
| | | | | CA | 2482431 | A1 | 23-10-2003 |
| | | | | CA | 2664732 | A1 | 23-10-2003 |
| | | | | CN | 1647528 | A | 27-07-2005 |
| | | | | EP | 1496701 | A1 | 12-01-2005 |
| | | | | EP | 2200315 | A1 | 23-06-2010 |
| | | | | EP | 2202648 | A1 | 30-06-2010 |
| | | | | EP | 2202649 | A1 | 30-06-2010 |
| | | | | EP | 2202977 | A1 | 30-06-2010 |
| | | | | EP | 2202978 | A1 | 30-06-2010 |
| | | | | EP | 2202979 | A1 | 30-06-2010 |
| | | | | JP | 4652462 | B2 | 16-03-2011 |
| | | | | JP | 4987907 | B2 | 01-08-2012 |
| | | | | JP | 2009171621 | A | 30-07-2009 |
| | | | | JP | 2009171622 | A | 30-07-2009 |
| | | | | JP | 2009171623 | A | 30-07-2009 |
| | | | | JP | 2009171624 | A | 30-07-2009 |
| | | | | KR | 20060097767 | A | 15-09-2006 |
| | | | | KR | 20080064875 | A | 09-07-2008 |
| | | | | KR | 20100055541 | A | 26-05-2010 |
| | | | | SG | 152905 | A1 | 29-06-2009 |
| | | | | TW | I231140 | B | 11-04-2005 |
| | | | | US | 2005149557 | A1 | 07-07-2005 |
| | | | | US | 2008065697 | A1 | 13-03-2008 |
| | | | | US | 2008071836 | A1 | 20-03-2008 |
| | | | | US | 2008071837 | A1 | 20-03-2008 |
| | | | | US | 2008071838 | A1 | 20-03-2008 |
| | | | | US | 2008075431 | A1 | 27-03-2008 |
| | | | | US | 2010005070 | A1 | 07-01-2010 |
| | | | | WO | 03088665 | A1 | 23-10-2003 |
| US 2004103233 | A1 | | 27-05-2004 | EP | 1437895 | A1 | 14-07-2004 |
| | | | | US | 2004103233 | A1 | 27-05-2004 |

EPO FORM P0459

For more details about this annex : see Official Journal of the European Patent Office, No. 12/82